# EUROPÄISCHE PATENTSCHRIFT

(11) **EP 2 700 438 B1**
(45) Veröffentlichungstag und Bekanntmachung des Hinweises auf die Patenterteilung: **06.05.2015**
(21) Anmeldenummer: 13181435.2
(22) Anmeldetag: 23.08.2013
(51) Int. Cl.: B01D 46/00

(54) **Filtereinrichtung**
Filter device
Dispositif de filtre

(30) Priorität: 24.08.2012 AT 503422012
(43) Veröffentlichungstag der Anmeldung: 26.02.2014
(73) Patentinhaber: IFT GmbH, 6200 Jenbach (AT)
(72) Erfinder: Gruber, Christoph, 6283 Hippach (AT); Mauracher, Walter, 6280 Rohrberg (AT)
(74) Vertreter: Schwarz & Partner

(56) Entgegenhaltungen:
- DE-A1- 19 645 666
- GB-A- 2 261 830
- US-A1- 2004 040 272
- US-A1- 2007 175 191
- US-A1- 2011 056 381

## Beschreibung

Die Erfindung betrifft eine Filtereinrichtung, zur Abscheidung von flüssigen, in Tröpfchen- oder Nebelform vorliegenden Begleitstoffen aus gasförmigen Stoffströmen, umfassend ein Gehäuse und einen darin angeordneten Filtereinsatz, der zumindest eine Filterlage und eine Drainageschicht aufweist. Weiters betrifft die Erfindung einen Filtereinsatz, der zumindest eine Filterlage und eine Drainageschicht aufweist.

Die Filtration von gasförmigen Stoffströmen zur Entfernung von in Tröpfchen oder Nebelform vorliegenden Flüssigfraktionen kann auf unterschiedliche Art und Weise erfolgen. In Abhängigkeit von den Erfordernissen und Randbedingungen werden verschiedene Techniken dazu eingesetzt. Weit verbreitet sind Filtersysteme, die Filterschichten aus Fasermaterial verwenden, wobei diese Faserschichten entweder sehr dicht gepackt sind, jedoch eine geringe Schichtdicke aufweisen oder - umgekehrt - eine losere Filterpackung bei größerer Schichtdicke aufweisen können. Im ersten Fall spricht man in der Regel von Oberflächen-Sperrfiltern im zweiten Fall von tiefenwirkenden Filtersystemen.

Filtersysteme solcher Art sind in vielerlei Ausführungen bekannt und werden verbreitet in der Technik eingesetzt. Eine besondere Herausforderung für die Eliminierung von Flüssigkeiten höherer Viskosität (verglichen zum Beispiel mit Wasser) aus gasförmigen Stoffströmen ist dabei die Standzeit der Filtereinsätze. Insbesondere dort, wo die Flüssigfraktion in kleinsten Tröpfchen (z.B. mit Durchmessern von < 0,2 µm) vorliegt und ein sehr hoher Reinheitsgrad des gasförmigen Stoffstromes gefordert wird, müssen relativ dicht gepackte Faserschichten eingesetzt werden, aus denen wiederum die zu einer zusammenhängenden viskosen Flüssigkeit koagulierten Tröpfchen nur sehr schwer abfließen können. Die Konsequenzen sind entweder relativ kurze Standzeiten des Filtereinsatzes oder der Einsatz großer Filterflächen mit entsprechend großen Bauteilabmessungen. Beide Varianten sind aber mit einem hohen Kostenaufwand verbunden.

Dem Erfindungsvorschlag liegt die Aufgabe zugrunde, die Abscheidung von höher-viskosen Flüssigbegleitstoffen aus gasförmigen Stoffströmen mit sehr hoher Abscheiderate bei gleichzeitig minimaler Baugröße so zu ermöglichen, dass unbegrenzte oder zumindest extrem hohe Filterstandzeiten erreicht werden.

Gelöst wird diese Aufgabe durch eine Filtereinrichtung, zur Abscheidung von flüssigen, in Tröpfchen- oder Nebelform vorliegenden Begleitstoffen aus gasförmigen Stoffströmen, umfassend ein Gehäuse und einen darin angeordneten Filtereinsatz, der zumindest eine Filterlage und eine Drainageschicht aufweist, dadurch gekennzeichnet, dass die Filterlage eine Eintrittsfläche und eine Austrittsfläche für den Stoffstrom aufweist, wobei sich die Drainageschicht in Strömungsrichtung entlang der Unterseite der Filterlage erstreckt, wobei an der Eintrittsfläche der Filterlage eine Strömungsbarriere vorgesehen ist, welche den an die Drainageschicht angrenzenden Bereich der Eintrittsfläche bis zu einem Gesamtanteil zwischen 20% und 50% und die eintrittsseitige Stirnfläche der Drainageschicht im Wesentlichen vollständig abdeckt.

Die erfindungsgemäße Lösung weist eine für die vorhandenen Filterlagen gemeinsame Drainageschicht auf, die für die Flüssigkeitsabfuhr in der jeweiligen Filterlage sorgt. Die spezielle Ausgestaltung mit den Strömungsbarrieren sorgt dafür, dass die in den Filterlagen angesammelte Flüssigkeit möglichst gut abgeleitet wird. Gleichzeitig wird verhindert, dass ein erst mangelhaft filtrierter Teil des gasförmigen Stoffstromes durch das grobporige Drainagemedium zur Filterausgangsöffnung gelangt.

Bevorzugt ist vorgesehen, dass der Filtereinsatz zumindest zwei Filterlagen aufweist, wobei jede der zwei Filterlagen eine Eintrittsfläche und eine Austrittsfläche für den Stoffstrom aufweisen, wobei die Austrittsfläche der ersten Filterlage an die Eintrittsfläche der zweiten Filterlage grenzt und wobei sich die Drainageschicht entlang der Unterseite der zumindest zwei Filterlagen erstreckt, wobei an der Eintrittsfläche der ersten Filterlage eine erste Strömungsbarriere und an der Eintrittfläche der zweiten Filterlage eine zweite Strömungsbarriere vorgesehen ist, welche die jeweilige Eintrittsfläche teilweise abdecken und welche den an die Drainageschicht angrenzenden Bereich der Eintrittsflächen abdecken wobei sich diese beide Strömungsbarrieren bis zur Drainageschicht erstrecken.

Besonders bevorzugt ist in diesem Fall vorgesehen, dass zwischen benachbarten Filterlagen im Wesentlichen kein Abstand besteht, sodass die Strömungsbarrieren zwischen zwei Filterlagen im Wesentlichen zwischenraumfrei an der Eintrittsfläche der einen Filterlage und an der Austrittsfläche der anderen Filterlage anliegt.

In einer Ausführungsvariante ist vorgesehen, dass an der Austrittsfläche des Filtereinsatzes eine Strömungsbarriere angeordnet ist, die einen Teil der austrittsseitigen Stirnfläche der Drainageschicht sowie einen Teil der Austrittsfläche des Filtereinsatzes abdeckt, sodass der obere Bereich der austrittsseitigen Stirnfläche der Drainageschicht bis zu einem Anteil zwischen 20 und 50 % der gesamten Stirnfläche und der untere, an die Drainageschicht angrenzende Teil der Austrittsfläche des Filtereinsatzes zu einem Anteil bis zu max. 10% abgedeckt wird. Es wird also die letzte Filterlage und die Drainageschicht jeweils teilweise abgedeckt.Damit wird unterbunden, dass die letzte Filterlage von einem Teil des Stoffstroms "umgangen" wird, indem dieser in die Drainageschicht eintritt.

Bei den erfindungsgemäß eingesetzten Materialien für die Filterlagen kommen bevorzugt poröse Materialien in Frage, die eine bestimmte Packungsdichte aufweisen. Besonders bevorzugt ist dabei vorgesehen, dass die in Strömungsrichtung erste Filterlage eine geringere Packungsdichte als die zweite Filterlage aufweist. Man spricht dann von einem Vorfilter (mit der geringeren Packungsdichte) und einem Feinfilter (mit der größeren Packungsdichte).

Der Filtereinsatz, durch den der zu filternde Stoffstrom geleitet wird, weist also bevorzugt mindestens zwei unterschiedliche Filterlagen auf, die in Strömungsrichtung des Stoffstromes eine zunehmende Packungsdichte und/oder eine abnehmende Porengröße aufweisen.

In einer Ausführungsvariante kann vorgesehen sein, dass die Drainageschicht eine stärkere Adhäsion zur abzuscheidenden Flüssigkeit als die Filterlage(n) aufweist. Die Drainageschicht kann dann eine für die abgeschiedene Flüssigkeit anziehende Wirkung ausüben (z.B. oleophil für die Abscheidung von Ölen).

Bevorzugt ist vorgesehen, dass die Filterlage(n) Poren aufweisen. In einer Ausführungsvariante kann vorgesehen sein, dass zumindest zwei Filterlagen vorhanden sind, wobei die in Strömungsrichtung frühere Filterlage eine geringere Packungsdichte, eine geringere Dicke oder eine geringere Packungsdichte und geringere Dicke aufweist, als die in Strömungsrichtung spätere Filterlage.

Zur Drainageschicht kann angemerkt werden, dass diese für die Ableitung der abgeschiedenen Flüssigkeit aus den Filterlagen Poren aufweisen kann, wobei dann der mittlere Porendurchmesser größer ist als die jener darüberliegenden Filterlagen, die für die Feinfilterung vorgesehen sind.

Besonders gute Filterleistung wird erzielt, wenn die Dicke der Drainageschicht im Verhältnis zur Gesamtdicke (d) der Filterslagen im Bereich zwischen 1:15 und 2:15 liegt.

Die Enden der Drainageschicht sind bevorzugt bündig mit den Begrenzungsflächen der Filterlagen.

In einer bevorzugten Ausführungsvariante ist vorgesehe, dass die Strömungsbarrieren am stromaufwärts gelegenen Ende der Drainageschicht 15 bis 50% der Filtereintrittsfläche bedecken, wobei bei Vorliegen von mehreren Strömungsbarrieren die stromabwärts gelegenen maximal die selbe Größe wie die vorangegangene stromaufwärts gelegene Strömungsbarriere aufweisen darf. Bevorzugt bedeckt die erste Strömungsbarriere zwischen 35% und 50% der Eintrittsfläche, die zweite Strömungsbarriere zwischen 25% und 35% der Eintrittsfläche und eine dritte Strömungsbarriere zwischen 15% und 20% der Eintrittsfläche. Zusätzlich zu den Strömungsbarrieren an den Eintrittsflächen der Filterlagen sowie an der eintrittsseitigen Stirnfläche der Drainageschicht, kann an der Austrittsseite des Filtereinsatzes eine Strömungssperrschicht vorgesehen sein, die einen Teil der austrittsseitigen Stirnfläche der Drainageschicht sowie einen geringen Teil der Austrittsseite der für die Feinfilterung vorgesehenen Filterschicht abdeckt. Nämlich jenen Bereich, der von der der Trennfläche zwischen Drainageschicht und Feinfilterschicht nach unten und nach oben weist. Dabei ist vorzugsweise vorgesehen, dass durch diese Strömungsbarriere zwischen 20 und 50 % der gesamten austrittsseitigen Stirnfläche der Drainageschicht und max. 10 % der gesamten Austrittsfläche der Feinfilterstufe (Filterlage) bedeckt werden.

Zu den Strömungsbarrieren kann angemerkt werden, dass diese bevorzugt zwischen den verschiedenen Filterlagen im unteren Bereich der Grenzflächen zwischen den Filterlagen für den Gasstrom undurchdringlich (oder schwer durchdringlich) angeordnet sind, bis zur Drainageschicht reichen und mindestens 15 % der Filterfläche bedecken.

Die Erfindung betrifft weiters einen Filtereinsatz der zumindest eine Filterlage und eine Drainageschicht aufweist, dadurch gekennzeichnet, dass die Filterlage eine Eintrittsfläche und eine Austrittsfläche für den Stoffstrom aufweist, wobei sich die Drainageschicht in Strömungsrichtung entlang der Unterseite der Filterlage erstreckt, wobei an der Eintrittsfläche der Filterlage eine Strömungsbarriere vorgesehen ist, welche die Eintrittsfläche teilweise abdeckt und welche den an die Drainageschicht angrenzenden Bereich der Eintrittsfläche abdeckt. Alle weiteren Details dieses Filtereinsatzes und alle weiteren Merkmale entsprechen den oben genannten, sodass darauf verwiesen werden kann.

Anhand in Figuren gezeigter Ausführungsbeispiele werden die Wirkungsweise der Erfindung sowie weitere Vorteile und Details näher erläutert.
- Fig. 1: zeigt schematisch ein erstes Ausführungsbeispiel für eine Filtereinrichtung gemäß der Erfindung im Querschnitt
- Fig. 2: zeigt schematisch den zu filternden Stoffstrom im Ausführungsbeispiel der Fig. 1
- Fig. 3: zeigt schematisch einen Filtereinsatz.
- Fig. 4: zeigt schematisch ein zweites Ausführungsbeispiel für eine Filtereinrichtung gemäß der Erfindung im Querschnitt

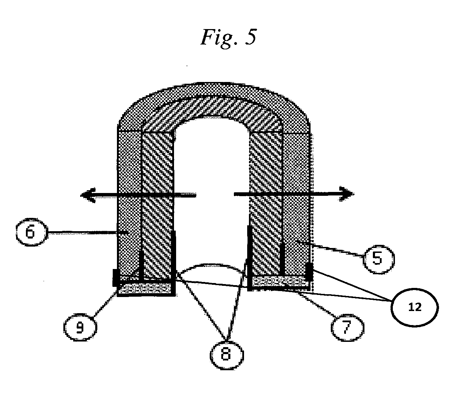

- Fig. 5: zeigt schematisch ein drittes Ausführungsbeispiel für eine Filtereinrichtung gemäß der Erfindung im Querschnitt

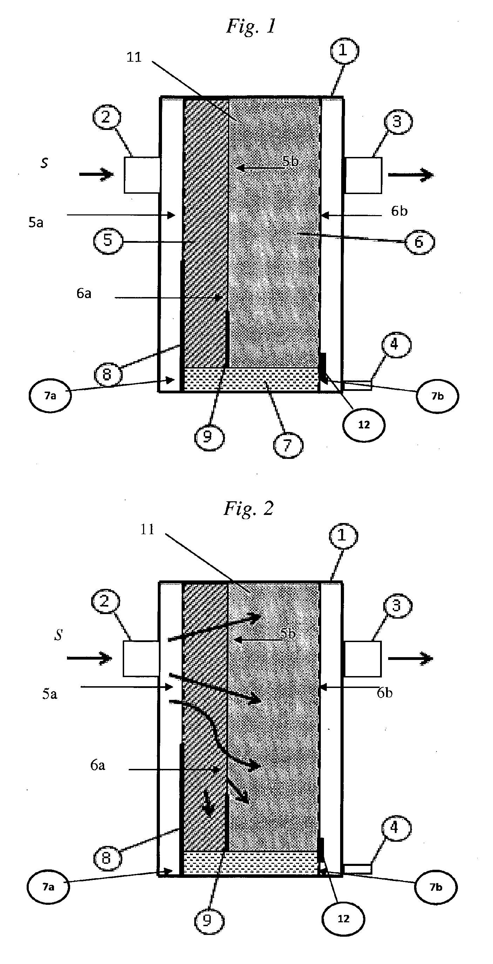

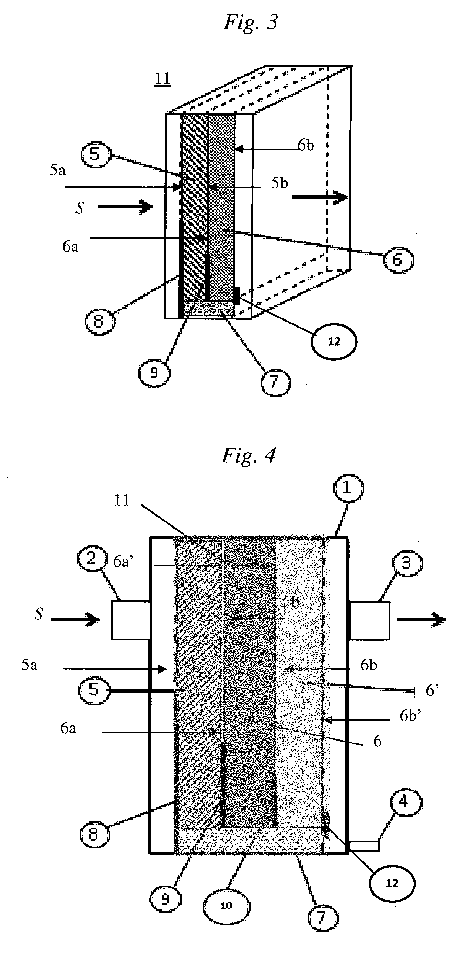

Fig. 1 zeigt im Querschnitt schematisch eine Filtereinrichtung gemäß dem vorgeschlagenen Konzept, wobei der prinzipielle Aufbau einzelner Filterlagen dem Stand der Technik entspricht. In Fig. 2 ist die Filtereinrichtung gemäß Fig. 1 im bestimmungsgemäßen Einsatz gezeigt, während Fig. 3 den Filtereinsatz 11 für die Filtereinrichtung der Fig. 1 zeigt. Es werden die drei Figuren daher nachfolgend gemeinsam erläutert. Gezeigt ist dabei eine Filtereinrichtung, zur Abscheidung von flüssigen, in Tröpfchen- oder Nebelform vorliegenden Begleitstoffen aus gasförmigen Stoffströmen. Die Filtereinrichtung umfasst ein Gehäuse 1, welches eine Eintrittsöffnung 2 und eine Austrittsöffnung 3 aufweist. Der zu filternde gasförmige Stoffstrom tritt zunächst in die Eintrittsöffnung 2 ein, wird im Filtereinsatz 11 filtriert und tritt bei der Austrittsöffnung 3 wieder aus. Im Gehäuseinneren werden filtrierte Flüssigkeiten gesammelt. Für die Ableitung der abgeschiedenen Flüssigkeits-Fraktion aus dem Filtergehäuse ist ein Abfluss 4 vorgesehen. Der Filtereinsatz 11 weist im gezeigten Ausführungsbeispiel zwei Filterlagen 5, 6 auf. Beide Filterlagen sind aus porösem Material und weisen eine unterschiedliche Porigkeit auf. Als Materialen können beispielsweise Vliese, Filterpapiere usw. genannt werden. Die erste Filterlage 5 weist eine gröbere Porigkeit als die zweite Filterlage 6 auf. Auch ist die Dicke in Strömungsdichtung S bei der ersten Filterlage 5 geringer als bei der zweiten Filterlage 6. Dadurch werden in der ersten Filterlage 5 die größeren Flüssigkeitspartikel filtriert, die zweite Filterlage 6 filtert dann noch die sehr feinen Flüssigkeitspartikel. Man spricht daher von einer Vorfilterstufe für die ersten Filterlage 5 und einer Feinfilterstufe für die zweite Filterlage 6.

Die Vorfilterstufe dient der Grob- oder Vorabscheidung der Flüssigfraktion(en) aus dem ankommenden Gasstrom. Hier werden die größeren Tröpfchen aus dem Gasstrom eliminiert. Dementsprechend ist die Struktur des Filtermediums grobporiger bzw. entsprechend loser gepackt, sodass die im größeren Tröpfchenspektrum anteilig oft relativ großen Flüssigkeitsmengen gut abgeführt werden können. Die Aufgabe der Feinfilterstufe ist die Eliminierung der in kleinen und kleinsten Tröpfchen vorliegenden Flüssigkeits-Fraktion aus dem Gasstrom. Im Gegensatz zur Vorfilterstufe sind die Filtermedien für die Feinfilterung sehr feinporig mit relativ dicht gepackten Faserfilamenten. Die jeweilige Tiefe der Vor- und Feinfilterstufen ist unterschiedlich und hängt naturgemäß davon ab, welche Stoffe zu filtrieren vorgesehen sind.

In der jeweiligen Filterlage 5, 6 werden dann die Flüssigkeitspartikel gesammelt, die zu größeren Tröpfchen aggregieren. Wenn eine bestimmte Tröpfchengröße erreicht ist, beginnen diese innerhalb der jeweiligen Filterlage 5, 6 nach unten zu fließen, wo sie in der Drainageschicht 7 gesammelt (und gegebenenfalls über den Abfluss 5 abgeleitet) werden. In der zweiten Filterlage 6, dem Feinfilter, kann aufgrund der Feinporigkeit und der relativ hohen Packungsdichte die koagulierte Flüssigkeit, insbesondere dann, wenn es sich um eine höher viskose Flüssigkeit handelt, nur in sehr begrenztem Ausmaß wieder ausfließen. Aus diesem Grund ist es von Vorteil, die im Vorfilter abgeschiedene Flüssigkeit aus dem Gehäuse 1 heraus zu leiten, ohne dass der Feinfilter 5 dadurch eine zusätzliche Ölzufuhr erleidet. Bei manchen, im Stand der Technik bekannten Anwendungen wird dieser Problemstellung dadurch Rechnung getragen, dass eine (eventuell zusätzliche) Abfuhröffnung für die Flüssigkeit auf der Vorfilterseite des Gehäuses angeordnet ist.

Ein Merkmal der vorgeschlagenen Lösung besteht darin, dass eine für die erste Filterlage 5 (dem Vorfilter 5) und die zweite Filterlage 6 (dem Feinfilter 6) gemeinsame Drainageschicht 7 an der Unterseite des Filtereinsatzes 11 vorgesehen ist, in der die aus den Filterlagen 5, 6 abfließenden Flüssigkeit gesammelt und durch den Druckabfall über den Filtereinsatz 11 zum Abfluss 4 am stromabwärts gelegenen unteren Ende des Gehäuses 1 gefördert wird. Diese Drainageschicht 7 besteht bevorzugt aus einem porösen bzw. gobporigen Material, beispielsweise einem relativ grobfaserigen Vlies, das im Unterschied zum Material des Feinfilters 6 und gegebenenfalls auch Vorfilters 5 bevorzugt eine für die abgeschiedene Flüssigkeit anziehende Wirkung aufweist, sodass die Flüssigkeit durch adhäsive Oberflächenkräfte angezogen bzw. aus den Filterlagen 5, 6 abgesaugt wird.

Erfindungsgemäß sind nun mehrere Strömungsbarrieren 8, 9, 12 vorgesehen, und zwar eine erste (äußerer) Strömungsbarriere 8 und eine zweite (innere) Strömungsbarriere 9 sowie eine abschließende Strömungsbarriere 12, die in den Fig. durch Verdickungen dargestellt sind und die auch als Strömungsleitflächen dienen. Die Strömungsbarrieren 8, 9 sind im stromaufwärts gelegenen Einlaufbereich der Drainageschicht 7 angeordnet. In der Fig. 1 sind die Strömungsbarrieren 8, 9 anhand einer Filtereinsatzes 11 mit zwei Filterlagen 5, 6 gezeigt. Die äußere Strömungsbarriere 8 sperrt die Zuströmung des zu filternden Stoffstromes (siehe auch Pfeile in Fig. 2) auf den unteren Bereich der Vorfilterstufe 5 und verhindert damit, dass ein Teil des Stoffstromes vom Vorfilter 5 direkt zur Drainageschicht 7 gelangt, die nur eine mangelhafte Filterwirkung aufweist. Die äußere eintrittsseitige Strömungsbarriere 8 bedeckt die Eintrittsfläche 5a der ersten Filterlage 5 teilweise sowie die eintrittseitige Stirnfläche 7a der Drainageschicht 7 vollständig. Der abgedeckte Bereich der Eintrittsfläche 5a, der von der äußeren Strömungsbarriere 8 abgedeckt wird, beträgt bevorzugt etwa 35 - 50% der kompletten Eintrittsfläche 5a, wobei die Abdeckung der Eintrittsfläche 5a an der Drainageschicht 7 beginnt. Die äußere Strömungsbarriere 8 ist eine gasdichte Abdeckung für den zu filternden Stoffstrom. Die Strömungsbarriere 12 bedeckt etwa 20 - 50 % der austrittsseitigen Stirnfläche 7b der Drainageschicht 7, wobei der untere Teil dieser Stirnfläche 7b für den Ausfluss der abgeschiedenen Flüssigkeit freigehalten wird.

Die innere Strömungsbarriere 9 sperrt den unteren Teil der Eintrittsfläche zum Feinfilter 6, sodass zu kurze Strömungswege durch den Feinfilter 6 ebenfalls verhindert werden. Somit muss jener relativ geringe Anteil des zu filternden Stoffstromes, der durch das Gebiet zwischen den Strömungsbarrieren 8, 9 zur Drainageschicht 7 gelangt, einen relativ langen Weg durch den Vorfilter 5 zurücklegen. Aufgrund der damit sehr langen Wegstrecke vom Eintritt des Stoffstromes in die Filterlage 5 bis zum Austritt aus der Filterlage 5, strömt durch diesen sich bildenden Kanal druckverlustbedingt nur noch ein sehr geringer Massenstrom, der überdies durch die große Filter-Tiefenwirkung selbst im Vorfilter 5 eine sehr gute Abscheiderate erfährt. Der abgedeckte Bereich der Eintrittsfläche 6a, der von der inneren Strömungsbarriere 9 abgedeckt wird, beträgt bevorzugt etwa 25 - 35% der kompletten Eintrittsfläche 6a, wobei die Abdeckung der Eintrittsfläche 6a an der Drainageschicht 7 beginnt. Die innere Strömungsbarriere 9 ist ebenfalls eine gasdichte Abdeckung für den zu filternden Stoffstrom.

Fig. 2 zeigt schematisch die Gasströmung durch einen zweistufigen Filtereinsatz 11 nach dem vorgeschlagenen Konzept mit Hilfe von Pfeilen. Aufgrund der großen Weglänge bei Strömung durch den von den Strömungsbarrieren 9, 10 abgedeckten Bereich, ist der Gasstrom entsprechen eingeschränkt bzw. relativ gering, wie durch die Pfeillängen qualitativ angedeutet. Die in den Filterlagen 5, 6 zurückgehaltene und dort akkumulierte Flüssigkeit kann ungehindert zur Drainageschicht 7 abströmen und wird dabei durch den Druckabfall über den Strömungspfad unterstützt. Die Drainageschicht 7 füllt sich solange mit der Flüssigkeit, bis die Sättigungsdichte überschritten und ein Gleichgewichtszustand erreicht wird, sodass die in die Drainageschicht 7 einströmende Menge identisch zur daraus stirnseitig an der strömungsabwärts gelegenen Seitenfläche austretenden ist.

Fig. 3 zeigt einen Querschnitt durch einen zweistufigen ebenen bzw. prismatischen Filtereinsatz 11 gezeigt. Die Strömungsrichtung des Stoffstromes ist durch Pfeile gekennzeichnet und verläuft auf der Darstellung von links nach rechts.

Fig. 4 zeigt ein Filtereinrichtung mit einem Filtereinsatz 11, der drei Lagen 5, 6, 6' aufweist. Die übrigen nicht mehr explizit beschriebenen Bauteile entsprechen den Bauteilen der vorangegangenen Figuren, sodass auf eine erneute Beschreibung verzichtet wird und auf die Figurenbeschreibung zu den Fig. 1 bis 3 verwiesen werden darf. Neben den drei Filterlagen 5, 6, 6' unterscheidet sich dieses Ausführungsbeispiel vom vorgehenden auch noch darin, dass eine dritte Strömungsbarriere 10 vorgesehen ist. Am Eintritt zur ersten Filterlage 5 wird die komplette untere Eintrittsfläche 5a bis zu einer Höhe von etwa 35 - 50 % der Gesamtfläche abgedeckt und durch die äußere Strömungsbarriere 8 gasdicht verschlossen. Am Übergang von der ersten Filterlage 5 zur zweiten Filterlage 6 ist die innere Strömungsbarriere 9 angeordnet, die etwa 25 - 35 % der unteren Eintrittsfläche zur 2. Filterstufe abdeckt und bis zur Drainageschicht 7 reicht. Analog ist am Übergang von der zweiten Filterlage 6 zur dritten Filterlage 6' ist die dritte Strömungsbarriere 10 angeordnet, die, im Vergleich zur inneren Strömungsbarriere 9 wiederum eine bevorzugt reduzierte Höhe aufweist. Diese bedeckt nur noch etwa 15 - 20 % der Eintrittsfläche 10a der dritten Filterlage 10.

In analoger Weise sind auch Filtereinsätze 11 mit weiteren Filterlagen und entsprechenden Strömungsbarrieren im Rahmen der Erfindung vorgesehen. Grundsätzlich ist das vorgeschlagene Konzept auch bei einem einstufigen Filtersystem anwendbar, allerdings wäre in diesem Fall nur eine Strömungsbarriere, nämlich jene am Eintritt und eine am Austritt der Filterstufe vorhanden.

Die Strömungsbarrieren bestehen sinnvollerweise aus für den gasförmigen Stoffstrom undurchdringlichen oder schwer durchdringlichen dünnen Schichten, beispielsweise aus Folien.

Als Alternative zur quaderförmigen Bauweise ist in der Fig. 6 noch ein Filtereinsatz in zylinder(mantel)form dargestellt. Dabei ist in Analogie zu den Fig. 1 bis 3 ein zylinderförmiger zweistufiger Filtereinsatz 11 mit zwei Filterlagen 5, 6 nach dem vorgeschlagenen Konzept dargestellt. Die übrigen Bauteile sind analog zu den vorangegangenen Beschreibungen.

In allen Fällen ist das Grundprinzip dasselbe: Der Stoffstrom tritt in den Vorfilter 5 ein, der durch die Strömungsbarriere 8 an der Unterseite verschlossen ist. Zwischen Vorfilter 5 und Feinfilter 6 ist die innere Strömungsbarriere 9 angeordnet, die, ausgehend von der Drainageschicht 7 ca. 20 - 30 % der unteren Eintrittsfläche 6a des Feinfilters 6 bedeckt. Am der Austrittsfläche des Filtereinsatzes befindet sich die abschließende Strömungsbarriere 12.

Das vorgeschlagene Konzept ist gedacht für Filtereinrichtungen, die, wie eingangs angeführt, flüssige Begleitstoffe aus gasförmigen Stoffströmen eliminieren, sich dabei jedoch nicht erschöpfen. Dazu muss die angesammelte Flüssigkeit gut aus dem Filtereinsatz abgeleitet werden. Diese Aufgabe wird durch den erfindungsgemäß vorgeschlagenen Lösungsweg sehr gut erfüllt, wie umfangreiche Experimente und Messungen gezeigt haben. Neben der prinzipiellen Bauform hängt die Filterleistung von der konstruktiven Auslegung sowie der Auswahl und Abstimmung der Struktur sowie der Beschaffenheit der Komponenten von ab. Dies kann dem Fachmann allerdings überlassen werden, zumal solche Materialien, wie für Filtereinrichtungen üblich, Einsatz finden. Als besonders vorteilhaft hat es sich dabei erwiesen, für die Drainageschicht 7 ein Medium zu verwenden, das eine anziehende Wirkung auf die Flüssigkeit ausübt und deren mittlere Porengröße in einem bestimmten Verhältnis zur Viskosität der Flüssigkeit steht. Besonders vorteilhaft zeigt sich dabei eine mittlere Porengröße des Mediums aus dem die Drainageschicht 7 besteht mit der Viskosität der Flüssigkeit die Bedingung:
Mittlere Porengröße [mm] x Viskosität der abgeschiedenen Flüssigkeit [cSt] = 0,3 - 15 erfüllt.

## Patentansprüche

1. Filtereinrichtung, zur Abscheidung von flüssigen, in Tröpfchen- oder Nebelform vorliegenden Begleitstoffen aus gasförmigen Stoffströmen, umfassend ein Gehäuse (1) und einen darin angeordneten Filtereinsatz (11), der zumindest eine Filterlage (5, 6, 6') und eine Drainageschicht (7) aufweist, **dadurch gekennzeichnet, dass** die Filterlage (5) eine Eintrittsfläche (5a) und eine Austrittsfläche (5b) für den Stoffstrom aufweist, wobei sich die Drainageschicht (7) in Strömungsrichtung (S) entlang der Unterseite der Filterlage (5) erstreckt, wobei an der Eintrittsfläche (5a) der Filterlage (5) eine Strömungsbarriere (8) vorgesehen ist, welche den an die Drainageschicht (7) angrenzenden Bereich der Eintrittsfläche (5a) bis zu einem Gesamtanteil zwischen 20% und 50% (5a) und die eintrittsseitige Stirnfläche (7a) der Drainageschicht (7) im Wesentlichen vollständig abdeckt.

2. Filtereinrichtung nach Anspruch 1, **dadurch gekennzeichnet, dass** der Filtereinsatz (11) zumindest zwei Filterlagen (5, 6, 6') aufweist, wobei jede der zwei Filterlagen eine Eintrittsfläche (5a, 6a, 6a') und eine Austrittsfläche (5b, 6b, 6b') für den Stoffstrom aufweisen, wobei die Austrittsfläche (5b) der ersten Filterlage (5) an die Eintrittsfläche (6a) der zweiten Filterlage (6) grenzt und wobei sich die Drainageschicht (7) entlang der Unterseite der zumindest zwei Filterlagen (5, 6) erstreckt, wobei an der Eintrittsfläche (5a) der ersten Filterlage (5) eine erste Strömungsbarriere (8) und an der Eintrittfläche (6a) der zweiten Filterlage (6) eine zweite Strömungsbarriere (9) vorgesehen ist, welche die jeweilige Eintrittsfläche (5a, 6a) teilweise abdecken und welche den an die Drainageschicht (7) angrenzenden Bereich der Eintrittsflächen (5a, 6a) abdecken wobei sich beide Strömungsbarrieren (8, 9, 10) bis zur Drainageschicht (7) erstrecken.

3. Filtereinrichtung nach Anspruch 1 oder Anspruch 2, **dadurch gekennzeichnet, dass** an der Austrittsfläche (5b) des Filtereinsatzes eine Strömungsbarriere (12) angeordnet ist, die einen Teil der austrittsseitigen Stirnfläche (7b) der Drainageschicht (7) sowie einen Teil der Austrittsfläche des Filtereinsatzes (6b) abdeckt, sodass der obere Bereich der austrittsseitigen Stirnfläche (7b) der Drainageschicht (7) bis zu einem Anteil zwischen 20 und 50 % der gesamten Stirnfläche (7b) und der untere, an die Drainageschicht (7) angrenzende Teil der Austrittsfläche des Filtereinsatzes (6b) zu einem Anteil bis zu max. 10% abgedeckt wird.

4. Filtereinrichtung nach einem der Ansprüche 1 bis 3, **dadurch gekennzeichnet, dass** die Drainageschicht (7) eine stärkere Adhäsion zur abzuscheidenden Flüssigkeit als die Filterlage(n) (5, 6) aufweist.

5. Filtereinrichtung nach einem der Ansprüche 1 bis 4, **dadurch gekennzeichnet, dass** die Filterlage(n) (5, 6, 6') Poren aufweisen, wobei vorzugsweise zumindest zwei Filterlagen (5, 6, 6') vorhanden sind, wobei die in Strömungsrichtung frühere Filterlage (5) eine geringere Packungsdichte, eine geringere Dicke oder eine geringere Packungsdichte und geringere Dicke aufweist, als die in Strömungsrichtung spätere Filterlage (6, 6').

6. Filtereinrichtung nach Anspruch 5, **dadurch gekennzeichnet, dass** die Drainageschicht (7) für die Ableitung der abgeschiedenen Flüssigkeit aus den Filterlagen (5, 6, 6') Poren aufweist, wobei der mittlere Porendurchmesser größer ist als jener der darüberliegenden Filterlage(n) (6, 6'), welche für die Feinfilterung vorgesehen sind.

7. Filtereinrichtung nach einem der Ansprüche 1 bis 6, **dadurch gekennzeichnet, dass** die die Dicke der Drainageschicht (7) im Verhältnis zur Gesamtdicke (d) der Filterslagen (5, 6, 6') im Bereich zwischen 1:15 und 2:15 liegt.

8. Filtereinrichtung nach einem der Ansprüche 1 bis 7, **dadurch gekennzeichnet, dass** die Enden der Drainageschicht (7) bündig mit den Begrenzungsflächen der Filterlagen (5, 6, 6') sind.

9. Filtereinrichung nach einem der Ansprüche 1 bis 8, **dadurch gekennzeichnet, dass** die Strömungsbarriere(n) (8, 9, 10) am stromaufwärts gelegenen Ende der Drainageschicht (7) 15 bis 50% der Filtereintrittsfläche (5a, 6a, 6a') bedeckt/bedecken, wobei bei Vorliegen von mehreren Strömungsbarrieren (8, 9, 10) die stromabwärts gelegenen maximal die selbe Größe wie die vorangegangene stromaufwärts gelegene Strömungsbarriere (8, 9, 10) aufweisen dürfen.

10. Filtereinsatz (11) der zumindest eine Filterlage (5, 6, 6') und eine Drainageschicht (7) aufweist, **dadurch gekennzeichnet, dass** die Filterlage (5) eine Eintrittsfläche (5a) und eine Austrittsfläche (5b) für den Stoffstrom aufweist, wobei sich die Drainageschicht (7) in Strömungsrichtung (S) entlang der Unterseite der Filterlage (5) erstreckt, wobei an der Eintrittsfläche (5a) der Filterlage (5) eine Strömungsbarriere (8) vorgesehen ist, welche die Eintrittsfläche (5a) teilweise abdeckt und welche den an die Drainageschicht (7) angrenzenden Bereich der Eintrittsfläche (5a) abdeckt.

## Claims

1. A filter device for separating liquid concomitant substances from gaseous material flows that are present in droplet or mist form, including a housing (1) and a filter insert (11) arranged therein, which has at least one filter layer (5, 6, 6') and one drainage layer (7), **characterized in that** the filter layer (5) has an entry surface (5a) and an exit surface (5b) for the material flow, wherein the drainage layer (7) extends in the flow direction (S) along the bottom side of the filter layer (5), wherein at the entry surface (5a) of the filter layer (5) there is provided a flow barrier (8), which covers the area of the entry surface (5a) adjacent to the drainage layer (7) up to an overall proportion between 20% and 50% (5a) and essentially completely the entry-sided front surface (7a) of the drainage layer (7).

2. A filter device according to claim 1, **characterized in that** the filter insert (11) has at least two filter layers (5, 6, 6'), wherein each of the two filter layers has an entry surface (5a, 6a, 6a') and an exit surface (5b, 6b, 6b') for the material flow, wherein the exit surface (5b) of the first filter layer (5) is adjacent to the entry surface (6a) of the second filter layer (6) and wherein the drainage layer (7) extends along the bottom side of the at least two filter layers (5, 6), wherein at the entry surface (5a) of the first filter layer (5) there is provided a first flow barrier (6) and at the entry surface (6a) of the second filter layer (6) there is provided a second flow barrier (9), which partially cover the respective entry surface (5a, 6a) and which cover the area of the entry surfaces (5a, 6a) adjacent to the drainage layer (7), wherein both flow barriers (8, 9, 70) will extend as far as the drainage layer (7).

3. A filter device according to claim 1 or claim 2, **characterized in that** there is arranged at the exit surface (5b) of the filter inset a flow barrier (12), which covers a part at the exit-sided front surface (7b) of the drainage layer (7) as well as a part of the exit surface of the filter insert (6b) so that the upper area of the exit-sided front surface (7b) of the drainage layer (7) is covered up to a proportion between 20% and 50% of the entire front surface (7b) and the lower part of the exit surface of the filter insert (6b) adjacent to the drainage layer (7) up to a proportion of up to 10% at the most.

4. A filter device according to any of claims 1 to 3, **characterized in that** the drainage layer (7) has a stronger adhesion to the liquid to be separated than the filter layer(s) (5, 6).

5. A filter device according to any of claims 1 to 4, **characterized in that** the filter layer(s) (5, 6, 6') have pores, wherein there are present preferably at least two filter layers (5, 6, 6'), wherein the filter layer (5) upstream in the flow direction has a lower packing density, a lower thickness or a lower packing density and a lower thickness than the filter layer (6, 6') downstream in the flow direction.

6. A filter device according to claim 5, **characterized in that** the drainage layer (7) has pores for the discharge of the separated liquid from the filter layers (5, 6, 6'), wherein the mean pore diameter is larger than that of the filter layer(s) (6, 6') situated above, which are provided for fine filtering.

7. A filter device according to any of claims 1 to 6, **characterized in that** the thickness of the drainage layer (7) is in relation with the overall thickness (d) of the filter layers (5, 6, 6') in a range from 1:15 to 2:15.

8. A filter device according to any of claims 1 to 7, **characterized in that** the ends of the drainage layer (7) are flush with the limitation surfaces of the filter layers (5, 6, 6').

9. A filter device according to any of claims 1 to 8, **characterized in that** the flow barrier(s) (8, 9, 10) cover(s) at the upstream situated end of the drainage layer (7) 15 to 50% of the filter entry surface (5a, 6a, 6a'), wherein upon presence of multiple flow barriers (8, 9, 10) the downstream situated ones are allowed to have at the maximum the same size as the preceding flow barrier (8, 9, 10) situated upstream.

10. A filter insert (11) having at least one filter layer (5, 6, 6') and one drainage layer (7), **characterized in that** the filter layer (5) has an entry surface (5a) and an exit surface (5b) for the material flow, wherein the drainage layer (7) extends in the flow direction (S) along the bottom side of the filter layer (5), wherein there is provided at the entry surface (5a) of the filter layer (5) a flow barrier (8), which partially covers the entry surface (5a) and which covers the area of the entry surface (5a) adjacent to the drainage layer (7).

## Revendications

1. Dispositif de filtre, pour la séparation de produits d'accompagnement liquides se présentant sous forme de gouttelettes ou de brouillard, hors de flux de produits gazeux, comprenant un boîtier (1) et un insert de filtre (11) agencé dans celui-ci, qui comprend au moins une couche de filtre (5, 6, 6') et une couche de drainage (7), **caractérisé en ce que** la couche de filtre (5) présente une surface d'entrée (5a) et une surface de sortie (5b) pour le flux de produits, dans lequel la couche de drainage (7) s'étend, en direction d'écoulement (S), le long de la face inférieure de la couche de filtre (5), dans lequel au niveau de la surface d'entrée (5a) de la couche de filtre (5) il est prévu une barrière d'écoulement (8), laquelle recouvre la région de la surface d'entrée (5a) adjacente à la couche de drainage (7) jusqu'à une proportion totale entre 20 % et 50 % (5a), et recouvre la surface frontale (7a) du côté entrée de la couche de drainage (7) sensiblement entièrement.

2. Dispositif de filtre selon la revendication 1, **caractérisé en ce que** l'insert de filtre (11) comprend au moins deux couches de filtre (5, 6, 6'), dans lequel chacune des deux couches de filtre présente une surface d'entrée (5a, 6a, 6a') et une surface de sortie (5b, 6b, 6b') pour le flux de produits, dans lequel la surface de sortie (5b) de la première couche de filtre (5) est adjacente à la surface d'entrée (6a) de la seconde couche de filtre (6), et dans lequel la couche de drainage (7) s'étend le long de la face inférieure desdites au moins deux couches de filtre (5, 6), dans lequel au niveau de la surface d'entrée (5a) de la première couche de filtre (5) il est prévu une première barrière d'écoulement (8), et au niveau de la surface d'entrée (6a) de la seconde couche de filtre (6) il est prévu une seconde barrière d'écoulement (9), lesquelles recouvrent partiellement la surface d'entrée respective (5a, 6a) et recouvrent la région des surfaces d'entrée (5a, 6a) adjacente à la couche de drainage (7), et les deux barrières d'écoulement (8, 9, 10) s'étendent jusqu'à la couche de drainage (7).

3. Dispositif de filtre selon la revendication 1 ou 2, **caractérisé en ce que**, à la surface de sortie (5b) de l'insert de filtre, est agencée une barrière d'écoulement (12), qui recouvre une partie de la surface frontale (7b) du côté sortie de la couche de drainage (7) ainsi qu'une partie de la surface de sortie de l'insert de filtre (6b), de sorte que la région supérieure de la surface frontale (7b) du côté sortie de la couche de drainage (7) est recouverte jusqu'à une proportion entre 20 % et 50 % de la surface frontale totale (7b), et la partie inférieure, adjacente à la couche de drainage (7), de la surface de sortie de l'insert de filtre (6b) est recouverte jusqu'à une proportion allant au maximum à 10 %.

4. Dispositif de filtre selon l'une des revendications 1 à 3, **caractérisé en ce que** la couche de drainage (7) présente une adhésion plus forte vis-à-vis du liquide à séparer que la ou les couches de filtre (5, 6).

5. Dispositif de filtre selon l'une des revendications 1 à 4, **caractérisé en ce que** la ou les couches de filtre (5, 6, 6') comporte des pores, et il est de préférence prévu au moins deux couches de filtre (5, 6, 6'), de sorte que la couche de filtre (5) en avance en direction d'écoulement présente une plus faible densité, une plus faible épaisseur ou une plus faible densité et une plus faible épaisseur que la couche de filtre (6, 6') en arrière en direction d'écoulement.

6. Dispositif de filtre selon la revendication 5, **caractérisé en ce que** la couche de drainage (7) comporte, pour l'évacuation du liquide séparé hors des couches de filtre (5, 6, 6'), des pores, et le diamètre moyen des pores est plus grand que celui de la ou des couches de filtre (6, 6') situées au-dessus, lesquelles sont prévus pour le filtrage fin.

7. Dispositif de filtre selon l'une des revendications 1 à 6, **caractérisé en ce que** l'épaisseur de la couche de drainage (7), par comparaison à l'épaisseur totale (d) des couches de filtre (5, 6, 6') est dans la plage entre 1:15 et 2:15.

8. Dispositif de filtre selon l'une des revendications 1 à 7, **caractérisé en ce que** les extrémités de la couche de drainage (7) sont en affleurement avec les surfaces de délimitation des couches de filtre (5, 6, 6').

9. Dispositif de filtre selon l'une des revendications 1 à 8, **caractérisé en ce que** la ou les barrières d'écoulement (8, 9, 10) recouvre(nt), à l'extrémité située en amont de la couche de drainage (7), de 15 à 50 % de la surface d'entrée (5a, 6a, 6a') du filtre, et en présence de plusieurs barrières d'écoulement (8, 9, 10) les barrières situées en aval peuvent présenter au maximum la même taille que les barrières d'écoulement (8, 9, 10) précédentes en amont.

10. Insert de filtre (11), qui comprend au moins une couche de filtre (5, 6, 6') et une couche de drainage (7), **caractérisé en ce que** la couche de filtre (5) présente une surface d'entrée (5a) et une surface de sortie (5b) pour le flux de produits, dans lequel la couche de drainage (7) s'étend en direction d'écoulement (S) le long de la face inférieure de la couche de filtre (5), et au niveau de la surface d'entrée (5a) de la couche de filtre (5) il est prévu une barrière d'écoulement (8) qui recouvre partiellement la surface d'entrée (5a), et qui recouvre la région de la surface d'entrée (5a) adjacente à la couche de drainage (7).
